# FASCICULE DE BREVET EUROPEEN

(11) **EP 3 178 598 B1**
(45) Date de publication et mention de la délivrance du brevet: **24.04.2019**
(21) Numéro de dépôt: 16201988.9
(22) Date de dépôt: 02.12.2016
(51) Int. Cl.: B23K 20/02, F28F 3/08, F28D 9/00, B23P 15/26, F28F 7/02, B23K 101/14

(54) **PROCÉDÉ DE RÉALISATION D'UN ÉCHANGEUR DE CHALEUR À AU MOINS DEUX CIRCUITS DE CIRCULATION DE FLUIDE, À GRAND NOMBRE DE CANAUX ET/OU DE GRANDES DIMENSIONS**
HERSTELLUNGSVERFAHREN EINES WÄRMETAUSCHERS MIT MINDESTENS ZWEI FLUIDUMWÄLZKREISLÄUFEN MIT EINER VIELZAHL VON KANÄLEN UND/ODER MIT GROSSEN ABMESSUNGEN
METHOD FOR PRODUCING A HEAT EXCHANGER WITH AT LEAST TWO FLUID FLOW PATHS, WITH A LARGE NUMBER OF CHANNELS AND/OR LARGE DIMENSIONS

(30) Priorité: 07.12.2015 FR 1561906
(43) Date de publication de la demande: 14.06.2017
(73) Titulaire: COMMISSARIAT À L'ÉNERGIE ATOMIQUE ET AUX ÉNERGIES ALTERNATIVES, 75015 Paris (FR)
(72) Inventeur: MORO-LE GALL, Isabelle, 38600 FONTAINE (FR); CIGNA, Julien, VILLARS DE LANS (FR); RIGAL, Emmanuel, 38360 SASSENAGE (FR)
(74) Mandataire: Nony

(56) Documents cités:
- FR-A1- 2 998 953
- FR-A1- 3 005 499

## Description

### Domaine technique

La présente invention concerne les échangeurs de chaleur à au moins deux circuits de fluide comportant chacun des canaux (voir, par exemple, FR3005499 B1).

L'invention a trait plus particulièrement à un nouveau procédé de fabrication afin d'obtenir de tels échangeurs avec un grand nombre de canaux et/ou des grandes dimensions.

Les échangeurs de chaleur connus comprennent soit un soit au moins deux circuits à canaux de circulation interne de fluide. Dans les échangeurs à un seul circuit, les échanges thermiques se réalisent entre le circuit et un fluide environnant dans lequel il baigne. Dans les échangeurs à au moins deux circuits de fluide, les échanges thermiques se réalisent entre les deux circuits de fluide.

Il est connu des réacteurs chimiques qui mettent en oeuvre un procédé en continu selon lequel on injecte simultanément une quantité faible de co-réactants, à l'entrée d'un premier circuit de fluide, de préférence équipé d'un mélangeur, et on récupère le produit chimique obtenu en sortie dudit premier circuit. Parmi ces réacteurs chimiques connus, certains comprennent un deuxième circuit de fluide, appelé usuellement utilité, et dont la fonction est de contrôler thermiquement la réaction chimique, soit en apportant la chaleur nécessaire à la réaction, soit au contraire en évacuant la chaleur dégagée par celle-ci. De tels réacteurs chimiques à deux circuits de fluide avec utilité sont usuellement appelés échangeurs-réacteurs.

La présente invention concerne aussi bien la réalisation d'échangeurs de chaleur à fonction uniquement d'échanges thermiques que la réalisation d'échangeurs-réacteurs. Aussi, par « échangeur de chaleur à au moins deux circuits de fluide », il faut comprendre dans le cadre de l'invention, aussi bien un échangeur de chaleur à fonction uniquement d'échanges thermiques qu'un échangeur-réacteur.

### Etat de la technique

Les échangeurs de chaleur, dits à plaques, existants présentent des avantages importants par rapports aux échangeurs de chaleur, dits à tubes, existants, en particulier leurs performances thermiques et leur compacité grâce à un rapport de la surface sur le volume d'échanges thermiques favorablement élevé.

Les échangeurs à tubes connus sont par exemple des échangeurs à tubes et calandre, dans lesquels un faisceau de tubes droits ou cintrés en forme de U ou en forme d'hélice est fixé sur des plaques percées et disposé à l'intérieur d'une enceinte dénommée calandre. Dans ces échangeurs à tubes et calandre, l'un des fluides circule à l'intérieur des tubes tandis que l'autre fluide circule à l'intérieur de la calandre. Ces échangeurs à tubes et calandre présentent un volume important et sont donc de faible compacité.

Les échangeurs à plaques connus sont plus compacts et sont obtenus par empilement de plaques comportant des canaux et assemblées entre elles.

De la même façon, les réacteurs-échangeurs, dits à plaques, ont comme avantage une forte compacité et des capacités élevées de refroidissement et donc de maitrise thermique, lors des réactions chimiques. Ces dernières sont en effet souvent exothermiques, et il est nécessaire de limiter la montée en température dans les canaux réactifs, i.e. où se produit la réaction chimique, afin de maîtriser la réaction d'un point de vue thermique, et également de limiter le vieillissement thermique des catalyseurs parfois présents dans les canaux réactifs.

Dans tous les cas, les canaux sont généralement réalisés par emboutissage de plaques, le cas échéant par ajout de feuillards pliés sous forme d'ailettes ou par usinage de rainures. L'usinage est réalisé par des moyens mécaniques, par exemple par fraisage ou par voie chimique. L'usinage chimique est usuellement appelé gravage chimique ou électrochimique.

L'assemblage des plaques entre elles a pour objectif d'assurer l'étanchéité et/ou la tenue mécanique des échangeurs, notamment la tenue à la pression des fluides circulant à l'intérieur. L'assemblage concerne généralement un empilement réalisé en superposant, selon une séquence régulièrement répétée, des plaques de plusieurs types, chaque type correspondant à un des circuits de fluides, l'empilement pouvant contenir des plaques de séparation non rainurées.

Plusieurs techniques d'assemblage sont connues et sont mises en oeuvre en fonction du type d'échangeur à plaques souhaité. L'assemblage peut ainsi être obtenu par des moyens mécaniques, tels que des tirants maintenant l'empilement serré entre deux plaques épaisses et rigides disposées aux extrémités. L'étanchéité des canaux est alors obtenue par écrasement de joints rapportés. L'assemblage peut être également obtenu par soudage, généralement limité à la périphérie des plaques, ce qui nécessite parfois d'insérer, ultérieurement au soudage, l'échangeur dans une calandre pour permettre sa tenue à la pression des fluides. L'assemblage peut encore être obtenu par brasage, en particulier pour des échangeurs pour lesquels des ailettes sont ajoutées. L'assemblage peut enfin être obtenu par soudage par diffusion (soudage-diffusion).

Les deux dernières techniques citées permettent de réaliser des échangeurs particulièrement performants en termes de tenue mécanique. En effet, grâce à ces deux techniques, l'assemblage est obtenu non seulement à la périphérie des plaques mais aussi à l'intérieur de l'échangeur.

Les échangeurs de chaleur à plaques assemblés par soudage par diffusion présentent des joints encore plus performants mécaniquement que les joints des échangeurs obtenus par brasage du fait de l'absence du métal d'apport requis pour le brasage.

Le soudage-diffusion consiste à obtenir un assemblage à l'état solide en appliquant une force à chaud sur les pièces à assembler pendant un temps donné. La force appliquée a une fonction double: elle permet l'accostage, c'est-à-dire la mise en contact des surfaces à souder, et facilite l'élimination par fluage-diffusion de la porosité résiduelle dans les joints (interfaces).

La force peut être appliquée par compression uniaxiale, par exemple à l'aide d'une presse équipée d'un four ou simplement à l'aide de masses disposées au sommet de l'empilement des pièces à assembler. Ce procédé est communément appelé soudage-diffusion uniaxial et il est appliqué industriellement pour la fabrication d'échangeurs de chaleur à plaques.

Une limitation importante du procédé soudage-diffusion uniaxial tient au fait qu'il ne permet pas de souder des joints d'orientation quelconque par rapport à la direction d'application de la force de compression uniaxiale.

Un autre procédé alternatif pallie cet inconvénient. Dans cet autre procédé, la force est appliquée via un gaz sous pression dans une enceinte étanche. Ce procédé est communément appelé Compression Isostatique à Chaud (CIC). Un autre avantage du procédé de soudage-diffusion par CIC comparativement au procédé de soudage-diffusion uniaxial est qu'il est plus largement répandu à l'échelle industrielle. En effet, la CIC est aussi utilisée pour le traitement par lots de pièces de fonderie ainsi que pour la compaction de poudres.

Les échangeurs compacts à plaques obtenus par soudage par diffusion actuellement connus présentent aussi des inconvénients que l'on peut énumérer comme suit.

Un premier inconvénient est le coût de fabrication des plaques, en particulier dans le cas de plaques à canaux usinés. Le gravage chimique permet certes une certaine réduction de coût par rapport à l'usinage mécanique mais qui est toute relative : en effet, rapporté à une longueur donnée, le coût d'un canal d'un échangeur à plaques réalisé par gravage chimique est supérieur à celui d'un échangeur à tubes. En outre, le gravage chimique présente de nombreux inconvénients, tels qu'une précision dimensionnelle insuffisante, un arrondissement des arêtes défavorable au soudage par diffusion ou une pollution résiduelle des surfaces à assembler par des résidus des produits de décapage et de masquage utilisés.

Le deuxième inconvénient des échangeurs à plaques réside en l'importance d'obtenir une étanchéité optimale de chaque circuit de fluide par rapport aux autres circuits et à l'environnement de l'échangeur, principalement pour des notions de sécurité. En conséquence, la fabrication d'un tel échangeur nécessite la plupart du temps un état de surface des plaques quasi exempt de tout défaut. Des défauts initialement présents en surface des plaques avant fabrication de l'échangeur peuvent subsister après fabrication et ainsi permettre une fuite éventuelle de l'un des fluides. Avant fabrication, des contrôles de surface longs et fastidieux de chaque tôle sont alors nécessaires pour détecter ces défauts, et de nombreuses plaques peuvent être rebutées le cas échéant. De plus, le contrôle de l'étanchéité de l'échangeur de chaleur à au moins deux circuits de fluide après fabrication est difficile à mettre en oeuvre avec les techniques actuelles. L'ensemble de ces opérations de contrôle couplé au rebut de plaques présentant des défauts peuvent générer des surcoûts importants.

Un autre inconvénient des échangeurs compacts à plaques soudées par diffusion est la difficulté à trouver un bon compromis entre la résistance mécanique des joints d'interface obtenus, la déformation acceptable des canaux et le grossissement de grain du matériau de structure.

En effet, dans le procédé de soudage-diffusion uniaxial, on peut appliquer une force de faible voire très faible valeur qui déforme peu les canaux, à la condition que les plaques soient bien en contact mutuel et que la faible valeur de la force soit compensée par une augmentation de la température de soudage pour l'élimination de la porosité aux interfaces. Ces conditions impliquent inévitablement un grossissement du grain du matériau qui peut devenir rédhibitoire vis-à-vis de sa résistance à la corrosion et de ses propriétés mécaniques. En outre, dans de nombreuses applications, il est critique que le nombre de grains de matériau situés entre deux circuits de fluide dépasse une valeur minimale pour éviter les risques de fuite.

Cette problématique du bon compromis à trouver est d'autant plus cruciale et importante que la taille du réacteur et/ou le nombre de canaux du réacteur augmente(nt).

Dans le procédé de soudage-diffusion par CIC, l'empilement des pièces est préalablement encapsulé dans un conteneur étanche pour éviter que le gaz ne pénètre dans les interfaces constituées par les surfaces à souder. La pression de gaz habituellement utilisée est élevée, de l'ordre de 500 à 2000 bar, typiquement 1000 bar. La pression minimale de fonctionnement des enceintes industrielles adaptées pour mettre en oeuvre la CIC est quant à elle comprise entre 40 et 100 bar. Or, les joints soudés à cette pression sont moins résistants que ceux obtenus à plus haute pression, par exemple à 1000 bar, toutes les autres conditions étant égales par ailleurs (matériau, température, état de surface...). De surcroît, cette pression entre 40 et 100 bar est encore trop importante pour des plaques à grande densité de canaux, c'est-à-dire des plaques dont la surface de contact déterminée avec une plaque adjacente est faible par rapport à la surface totale apparente. En effet, pour ce type de plaques, même une pression de quelques dizaines de bar peut suffire à engendrer une déformation inacceptable des canaux.

Une solution possible peut consister à diminuer la température d'assemblage pour que le matériau résiste mieux à la pression, mais cela revient à dégrader encore la résistance des joints.

Une autre solution possible peut consister à changer le dessin des canaux pour rendre l'empilement plus résistant à la pression, mais cela revient à rendre l'échangeur à plaques moins compact.

Enfin, une solution possible est, après avoir soudé par diffusion l'échangeur sous basse pression, d'ouvrir les canaux et de le soumettre à un cycle de CIC à haute pression, de façon à parfaire l'assemblage. Cette solution ne fonctionne que si la qualité de soudage lors du premier assemblage est suffisamment bonne et que des interfaces étanches ont été obtenues.

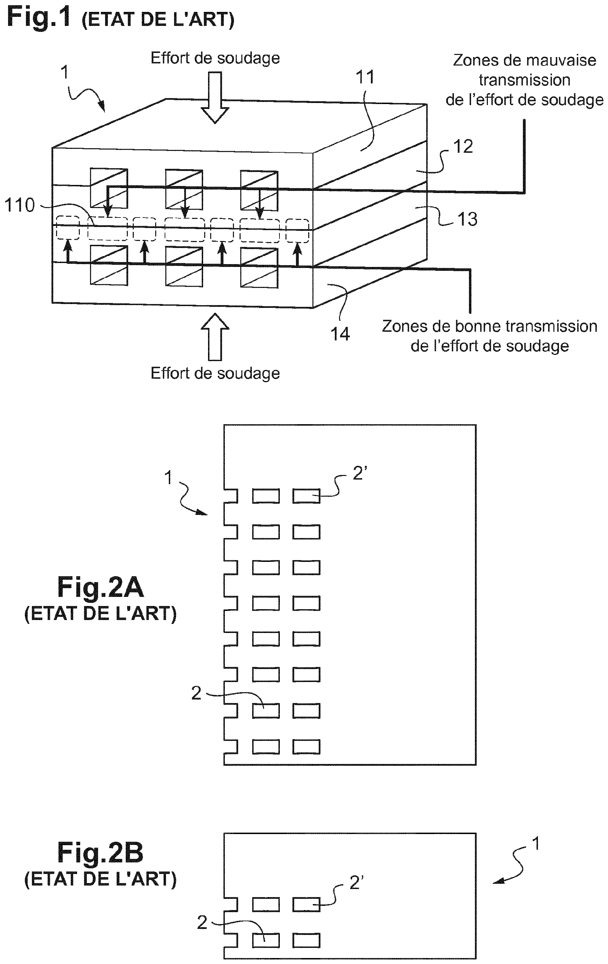

Il est à noter que la transmission de l'effort de soudage dans un empilement de plaques rainurées se fait de façon inégale, qu'il s'agisse du procédé de soudage diffusion uniaxial ou du procédé de soudage diffusion par CIC. En effet, les parties des interfaces situées sous les rainures sont soumises à un effort de soudage réduit puisque celui-ci n'est transmis que par les deux nervures, ou isthmes, situées de part et d'autre de chaque rainure. A l'inverse, un effort de soudage élevé est obtenu en regard des nervures. La qualité des interfaces peut donc varier d'un endroit à l'autre de l'empilement. On a représenté en figure 1, un empilement de quatre plaques rainurées 11, 12, 13, 14 qui subissent un soudage par diffusion afin de les assembler entre elles. Comme symbolisé sur cette figure, la qualité de transmission de l'effort de soudage à l'interface 110 entre les deux plaques 12, 13 varie en fonction des différentes zones en regard ou non des nervures ou isthmes.

En outre, cette hétérogénéité de transmission de l'effort de soudage pendant la fabrication de ces échangeurs de chaleur peut résulter en une déformation hétérogène de l'assemblage à l'issue du procédé de fabrication, une déformation la plus importante se produisant dans les zones ayant subi les efforts les plus importants, et vice-versa. Dans le cas particulier de la fabrication d'échangeur-réacteur, cette différence de géométrie finale entre les canaux réactifs est potentiellement très gênante. En effet, elle conduit à une différence de débit de gaz entre les canaux réactifs, et donc à une usure hétérogène des catalyseurs dans les différents canaux. Ceci peut conduire à l'apparition de points chauds et donc induire un réacteur avec un comportement thermique instable et non-prévisible, ce qui entraîne fatalement une baisse de rendement du réacteur et/ou une désactivation prématurée du catalyseur.

On peut diminuer la déformation par une diminution de la température d'assemblage pour que le matériau ait une meilleure tenue mécanique. Toutefois, cela revient à dégrader la résistance des joints obtenus après soudage-diffusion.

Une autre solution possible peut consister à changer la géométrie des canaux avec une diminution des dimensions des canaux et/ou une augmentation des dimensions des isthmes entre canaux, afin de rendre l'empilement plus résistant à la pression, mais cela revient à rendre l'échangeur à plaques moins compact.

Comme la déformation dépend aussi de la largeur des rives, qui sont les zones non rainurées situées latéralement de part et d'autre de la zone rainurée, et de l'épaisseur des enclumes, qui sont les zones non rainurées situées aux extrémités du dessus et du dessous de l'empilement, une autre solution pour diminuer la déformation consiste à épaissir ces zones. Cet épaississement doit être d'autant plus important que l'échangeur est de grande taille.

Cependant, les enceintes de CIC accessibles présentent des dimensions limitées: pour des échangeurs de grande taille, on atteint vite les limites des équipements en augmentant les dimensions des isthmes ou des rives latérales des échangeurs.

De plus, quand il est nécessaire de traiter un volume de fluide important, et donc de multiplier le nombre de canaux réactifs, il est toujours plus aisé d'avoir un seul réacteur de grande taille plutôt que de mettre en parallèle plusieurs réacteurs de taille plus réduite. En effet, d'une part il est délicat d'équilibrer parfaitement les débits entre les différents réacteurs, et il peut donc en résulter l'usure prématurée du catalyseur présent dans certains réacteurs par rapport à d'autres et, d'autre part, la mise en parallèle fluidique de plusieurs réacteurs sous-entend obligatoirement la multiplication des tubulures, vannes, et autres composants de distribution et de régulation. Il en résulte une augmentation du prix de l'installation, ainsi qu'une perte notable de la compacité de l'installation finale.

Or, si on cherche à fabriquer des réacteurs à plaques assembler par soudage-diffusion, c'est notamment du fait qu'ils présentent une compacité nettement meilleure que celle des réacteurs classiques à tubes, comme évoqué en préambule.

Dans cette optique de maintenir une compacité maximale de l'échangeur et de l'ensemble du système, la mise en place de rives de dimensions importantes et/ou l'insertion dans le réacteur de plaques pleines permettant une meilleure tenue mécanique à la pression sous haute température (et donc moins de déformation) lors du soudage est à éviter car cela entraîne fatalement une diminution de la compacité du réacteur.

Enfin, il n'est pas possible d'augmenter considérablement le nombre de plaques pour augmenter le nombre de canaux dans l'échangeur. En effet, si par exemple à pression et température données lors d'un cycle d'assemblage par CIC, la hauteur des canaux au centre de l'empilement diminue, en fin de cycle d'assemblage, par exemple de 10%, alors plus le nombre de canaux dans la hauteur du réacteur est important, et plus l'affaissement total de hauteur du réacteur l'est également. Il en résulte que la déformation des canaux des coins augmente avec le nombre de canaux empilés.

Cela est schématisé sur les figures 2A et 2B qui montrent, en coupe et sur un quart d'un empilement, les déformations calculées pour deux géométries (de dimensions identiques mais de nombre de plaques différentes) soumises à un même cycle de CIC. On voit que :
- l'affaissement de la hauteur de l'échangeur 1 de la figure 2A est supérieur à celui de la figure 2B qui a un nombre moindre de canaux 2 dans la hauteur ;
- les canaux de coins 2' sont plus déformés dans l'échangeur de la figure 2A que dans celui de la figure 2B.

Jusqu'à présent, lorsqu'on fabrique des échangeurs de grandes dimensions et/ou à grand nombre de canaux, afin d'augmenter encore leur compacité, on va chercher à diminuer les dimensions des canaux, celles des isthmes et des rives. Toutes ces tendances vont dans le sens d'une augmentation de la déformation des canaux lors de l'assemblage par CIC.

Le brevet FR3005499B1 décrit un procédé qui consiste à assembler par soudage diffusion dans un premier temps des éléments comportant les canaux du premier type de fluide puis, dans une second temps, à assembler ces derniers avec des éléments comportant les canaux du second type de fluide. Cette solution possède des avantages de plusieurs ordres, y compris la possibilité d'obtenir simultanément une bonne qualité d'interface et une faible déformation, mais elle reste assez lourde à mettre en oeuvre et onéreuse car l'assemblage est réalisé en plusieurs fois.

Il existe donc un besoin d'améliorer encore les procédés de réalisation d'échangeurs de chaleur de grandes dimensions et/ou à grand nombre de canaux, notamment en vue de limiter la déformation des canaux lors de l'assemblage des plaques constituant lesdits échangeurs, et ce sans dégrader les interfaces entre plaques ni nuire à la compacité des échangeurs.

Le but de l'invention est de répondre au moins partiellement à ce besoin.

### Exposé de l'invention

Pour ce faire, l'invention a pour objet un procédé de réalisation d'un échangeur de chaleur à au moins deux circuits de fluide comportant chacun des canaux, comportant les étapes suivantes :
a/ réalisation d'au moins deux modules élémentaires d'échangeur, la réalisation de chaque module élémentaire comprenant les étapes suivantes :
   i/ réalisation d'un ou plusieurs éléments d'un des deux circuits de fluide, dit premier circuit, chaque élément du premier circuit comportant au moins une plaque métallique comportant des premières rainures formant au moins une partie des canaux du premier circuit;
   ii/ réalisation d'un ou plusieurs éléments d'au moins un autre circuit de fluide, dit deuxième circuit, chaque élément du deuxième circuit comportant au moins une plaque métallique comportant des deuxièmes rainures formant au moins une partie des canaux du deuxième circuit;
   iii/ empilement des plaques métalliques des éléments des premier et deuxième circuits de sorte à former leurs canaux;
   iv/ assemblage par soudage-diffusion entre le ou les éléments du premier circuit et le ou les éléments du deuxième circuit, empilés les uns sur les autres ;
b/ modification d'au moins un des modules élémentaires comprenant une réduction de la largeur d'au moins une des rives et/ou de l'épaisseur d'au moins une des enclumes d'au moins un des modules et éventuellement une ouverture des canaux du premier circuit et/ou du deuxième circuit vers l'extérieur;
c/ positionnement bord-à-bord des modules élémentaires dont au moins un réduits, selon un de leurs bords longitudinaux ou un de leurs bords latéraux ;
d/ assemblage des interfaces entre les modules élémentaires bord-à-bord, afin d'obtenir l'échangeur sous forme monobloc.

Ainsi, l'invention consiste à assembler des modules élémentaires d'échangeurs eux-mêmes chacun préalablement réalisé par soudage diffusion de plaques rainurées.

Pour chaque module élémentaire d'échangeur des rives latérales importantes peuvent être utilisées, éventuellement sous forme de bordures non rainurées dans les plaques ou sous forme d'outils indépendants ajoutés dans le conteneur. Il en résulte une augmentation de la surface portante, et donc une diminution de la contrainte globale vue par le matériau, et par conséquent, une diminution de la déformation finale.

De même, des enclumes importantes peuvent être utilisées en début et fin d'empilement d'au moins un des modules élémentaires, éventuellement sous forme de plaques supplémentaires non rainurées ou sous forme d'outils indépendants ajoutés dans le conteneur. Il en résulte une augmentation de la rigidité de l'empilement qui évite sa déformation en regard de la zone rainurée lors du cycle de CIC.

Une fois ces modules élémentaires assemblés par soudage diffusion, l'excès de matière que représentent les enclumes et les rives est éliminé au moins en partie et le ou les modules dits réduits obtenus sont assemblés entre eux. Cette étape b/ de modification avec au moins une réduction de dimensions d'au moins un des modules élémentaires permet d'améliorer la compacité des modules élémentaires.

On obtient ainsi un échangeur monobloc qui peut être de grandes dimensions et/ou à grand nombre de canaux, ce qui n'aurait pas pu être réalisé en une seule fois selon les procédés de l'état de l'art car du fait de ces grandes dimensions et/ou du grand nombre de canaux, une déformation excessive serait apparue aux niveaux des canaux après assemblage par soudage-diffusion.

Dans l'étape a/, de préférence, préalablement à l'empilement, c'est-à-dire avant l'étape iii/, on peut réaliser avantageusement une étape il/ et iil/ de nettoyage des plaques de chaque élément respectivement du premier circuit et deuxième circuit. Le nettoyage peut être réalisé par exemple à l'aide de détergents ou de solvants.

Selon un mode de réalisation avantageux, on réalise l'étape iv/ par application d'un cycle de compression isostatique à chaud (CIC) à relativement basse pression à l'empilement étanche et dégazé. On désigne ici ce cycle CIC à relativement basse pression, car les pressions sont plus basses que celles d'un cycle CIC désigné à haute pression, i.e entre 500 et 2000 bar, avantageusement entre 800 et 1200 bar.

Le cycle de CIC type comporte un chauffage et une pressurisation le plus souvent simultanés, un palier de température et de pression puis un refroidissement et une dépressurisation. Ce cycle est choisi notamment en fonction du (des) matériau(x) des plaques constitutives des éléments du premier et du deuxième circuit. En particulier, on peut choisir la température de palier et les vitesses de chauffage et de pressurisation (respectivement de refroidissement et dépressurisation) notamment en tenant compte des capacités de l'enceinte de CIC utilisée.

Ainsi, de préférence, le cycle de CIC selon l'étape iv/ est réalisé selon les caractéristiques suivantes prises seules ou en combinaison:
- à une pression comprise entre 20 et 500 bar, de préférence compris entre 30 et 300 bar; le choix de la pression résulte d'un compromis entre qualité de soudage à obtenir et déformation acceptable des canaux;
- à une température comprise entre la température ambiante et 1100°C, de préférence entre 900 et 1100°C; la température que l'on retient dépend du matériau constitutif des plaques utilisées, de la taille de grain maximale admissible, et de la qualité de la jonction désirée;
- pendant une durée comprise entre 15 min et quelques heures, de préférence entre 1 et 4h ; les temps de chauffage et pressurisation (respectivement de refroidissement et dépressurisation) dépendent des caractéristiques et possibilités de l'équipement (enceinte) utilisé, ils sont habituellement de plusieurs heures.

Selon une première variante, au préalable de ce cycle CIC basse pression, on peut réaliser une étape d'étanchéification de la périphérie des au moins deux plaques métalliques de chaque élément, puis on réalise une étape de dégazage de l'intérieur de chaque empilement étanche à travers un orifice débouchant à chaque interface entre plaques, une étape de fermeture de l'orifice débouchant. Le dégazage des canaux et de la ou les interfaces est réalisé par mise sous vide, au travers de l'orifice débouchant puis celui-ci est obturé.

De manière alternative, on peut réaliser l'insertion de chaque empilement dans une enveloppe métallique, dite conteneur, puis une étape de soudage du conteneur, lequel possède un orifice débouchant en regard duquel un tube, dit queusot est soudé, une étape de dégazage à travers le queusot et puis soudage du queusot. Pour réaliser le dégazage, ce queusot est raccordé à une pompe à vide, le pompage est effectué à une température donnée, comprise entre la température ambiante et 400°C environ, puis le queusot est obturé par soudage, sans remise à l'air. La durée du pompage sera fonction de la qualité de vide désirée.

Lors de l'étape b/, la réduction de la largeur d'au moins une des rives et/ou de l'épaisseur d'au moins une des enclumes d'au moins un des modules peut être réalisée en enlevant les outils par démoulage ou usinage, ou en usinant les bordures non rainurées des plaques et/ou les enclumes. L'ouverture des canaux peut être réalisée par usinage des extrémités du module ou perçage en regard des canaux.

L'étape c/ de positionnement bord-à-bord peut consister en l'une ou l'autre des variantes suivantes :
- un empilement des modules élémentaires par les faces principales des plaques d'extrémité des modules ;
- un alignement bord-à-bord selon la longueur des modules élémentaires ;
- un positionnement bord latéral d'un des modules élémentaires contre un bord latéral de l'autre des modules élémentaires.

Cette étape c/ peut mettre en oeuvre l'utilisation de piges d'alignement ou de tout autre moyen destiné à assurer un positionnement correct des modules réduits de façon à établir la géométrie finale souhaitée, en particulier établir la continuité du ou des circuits de fluide.

L'étape d/ peut être réalisée par exemple par soudage par faisceau d'électrons, brasage ou soudage diffusion des modules réduits entre eux. Selon un mode préféré, cette étape d/ consiste en un soudage-diffusion par CIC. Dans ce cas, il est mis en oeuvre avec les étapes préférées suivantes :
- nettoyage des surfaces des modules élémentaires réduits à l'aide par exemple de solvants et/ou de détergents,
- étanchéification de la périphérie des interfaces des modules élémentaires réduits, par exemple par soudage ou en les insérant dans un conteneur soudé,
- dégazage des interfaces entre les modules élémentaires dont réduits, par exemple à l'aide d'un ou plusieurs queusot(s) soudé(s) en regard d'un ou plusieurs orifice(s) débouchant sur les interfaces ou d'un ou plusieurs queusot(s) soudé(s) en regard d'un ou plusieurs orifice(s) pratiqués dans la paroi du conteneur, le(s) queusots étant soudés de façon étanche à la fin du dégazage,
- application d'au moins un cycle de compression isostatique à chaud.

De plus, selon un mode encore préféré, le soudage-diffusion des modules élémentaires réduits est réalisé lors du cycle haute pression permettant de finir le soudage des interfaces internes des modules élémentaires. Ce procédé n'engendre qu'un surcoût minime, essentiellement lié à la réalisation des étanchéités entre les modules élémentaires, par exemple au moyen de soudures périphériques. Pour cela, l'étape b/ comprend une ouverture des canaux du premier circuit et/ou du deuxième circuit. Lorsqu'il est possible d'ouvrir les deux circuits de fluide, un seul cycle de CIC à haute pression peut être appliqué. Lorsque le positionnement des modules élémentaires réduits à l'issue de l'étape c/ ne permet d'ouvrir qu'un seul circuit, ce qui est le cas quand l'autre circuit débouche dans les interfaces entre modules élémentaires réduits, la pression du cycle de CIC doit être limitée pour ne pas déformer le circuit fermé. Dans ce cas, on peut ouvrir ce dernier à l'issue de ce cycle de CIC et appliquer un second cycle avec les deux circuits ouverts pour parfaire l'assemblage de l'échangeur.

Dans ce mode de réalisation, la transmission de l'effort de soudage est effectuée par la pression de gaz non seulement aux interfaces entre modules élémentaires mais aussi par l'intérieur des canaux de chacun des modules. Ainsi, l'effort de soudage est particulièrement bien réparti et le soudage des modules élémentaires entre eux est garanti.

L'invention permet donc de fabriquer des échangeurs à nombreux canaux et/ou à grandes dimensions, tout en obtenant une grande compacité à la fois de l'échangeur monobloc et du système global final et en minimisant le surcoût comparativement aux procédés de l'état de l'art, du fait qu'au plus une seule étape supplémentaire de soudage-diffusion est nécessaire.

Un module élémentaire peut comprendre des plaques en matériaux différents ou toutes réalisées en un même matériau, tel qu'un acier inoxydable du type 316L.

Le ou les matériaux constitutifs d'un module élémentaire peu(ven)t être identique(s) à ou différent(s) de celui ou ceux d'un autre module élémentaire.

Le procédé selon l'invention peut comprendre de préférence une étape e/ d'usinage final pour finaliser l'échangeur monobloc.

L'invention a également pour objet un échangeur de chaleur à au moins deux circuits de fluide obtenu selon le procédé tel que décrit précédemment.

L'invention est avantageusement mise à profit pour une fabrication d'échangeurs à bas coût industriel sans forte exigences thermo-hydrauliques mais à grande criticité d'étanchéité, telle que celle que l'on peut rencontrer dans les échangeurs-réacteurs.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue en coupe transversale d'un module d'échangeur selon l'état de l'art réalisé par CIC, montrant les différentes zones de transmission de l'effort de soudage ;
- les figures 2A et 2B sont des vues schématiques en coupe transversale de modules d'échangeur selon l'état de l'art réalisé par CIC selon un même cycle de CIC, respectivement de hauteur d'empilement supérieure et moindre, montrant la déformation des canaux d'un des circuits de fluide ainsi que l'affaissement de la hauteur des modules;
- les figures 3A, 3B et 3C sont des vues en perspective d'une plaque métallique destinée à réaliser un module élémentaire d'échangeur selon l'invention, respectivement avant la réalisation des rainures formant une partie des canaux de fluide, avec les rainures d'un des circuits sur l'une de ses faces principales et avec les rainures de l'autre des circuits sur l'autre de ses faces principales;
- la figure 4 est une vue en perspective d'un exemple de module élémentaire d'échangeur selon l'invention obtenu par assemblage par soudage-diffusion de plaques rainurées et empilées, avant l'étape d'ouverture des canaux;
- la figure 4A est une vue en coupe à la fois transversale et longitudinale de l'empilement du module élémentaire selon la figure 4;
- les figures 5, 6 et 7 sont des vues en perspective de trois modules élémentaires d'échangeur obtenus selon l'invention, avant leur assemblage mutuel pour constituer un échangeur monobloc selon l'invention;
- la figure 8 est une vue en perspective d'un exemple d'échangeur monobloc selon l'invention obtenu par positionnement bord-à-bord puis assemblage par soudage-diffusion des trois modules élémentaires selon les figures 5 à 7;
- la figure 8A est une vue en coupe transversale du module selon la figure 8, montrant les perçages réalisés lors de l'usinage des plaques des modules élémentaires et dont certains permettent la connexion des différentes zones des modules élémentaires positionnés bord-à-bord et d'autres permettent la mise sous vide des interfaces à souder entre modules élémentaires positionnés bord-à-bord.

Les termes « longitudinal » et « latéral », sont à considérer en relation avec la forme géométrique des plaques métalliques qui déterminent la forme géométrique des empilements du module d'échangeur thermique selon l'invention. Ainsi, au final les quatre côtés longitudinaux de l'empilement d'un module élémentaire d'échangeur selon l'invention sont ceux qui s'étendent parallèlement à l'axe X longitudinal des plaques, c'est-à-dire selon leur longueur. Les deux côtés latéraux de l'empilement sont ceux qui s'étendent selon l'axe Y latéral des plaques, orthogonalement à l'axe X, c'est-à-dire selon leur largeur.

Les termes « au-dessus » et « au-dessous » sont à considérer par rapport à la direction de l'empilement du module d'échangeur. Ainsi, la plaque de dessus, qui forme tout ou partie d'une enclume, est la dernière plaque que l'on empile sur les autres.

### Etape a/ :

On réalise tout d'abord de la même manière un nombre de plusieurs modules élémentaires d'échangeur qui peuvent être de dimensions différentes.

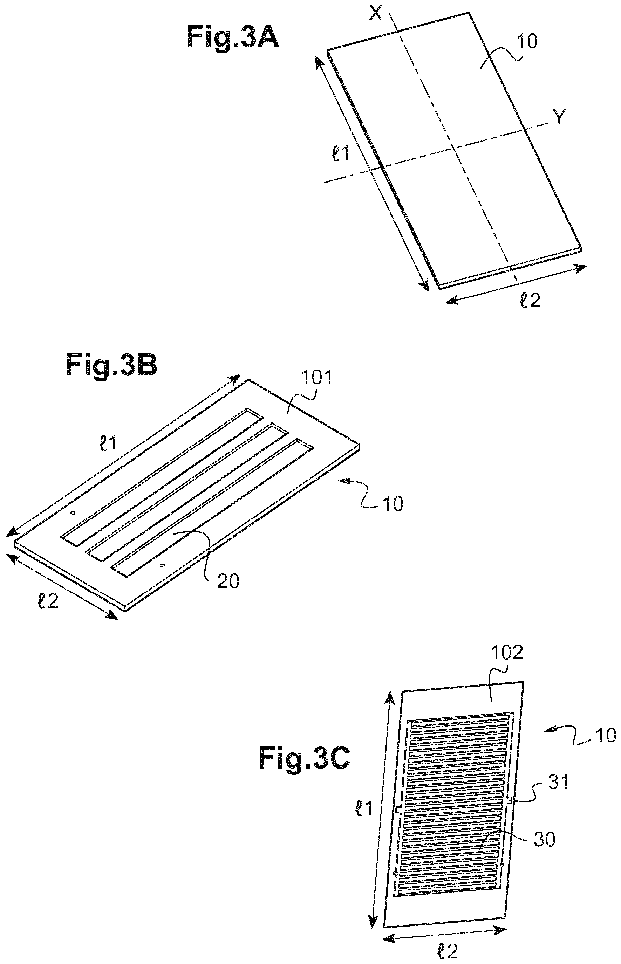

On décrit la réalisation selon la première étape a/ d'un module élémentaire 1.1, à partir de plaques métalliques 10, par exemple en acier inoxydable de type 316L, de longueur l1 et de largeur l2 (figure 3A). Les rives et les enclumes des plaques 10 sont avantageusement dimensionnées de telle façon que lors d'un assemblage par soudage-diffusion en CIC les déformations soient maîtrisées.
Etape i/ : Afin de réaliser un élément d'un premier circuit C1 de fluide, on usine dans une des faces principales 101 d'une plaque métallique 10, des rainures 20 droites et parallèles à la longueur 11 de la plaque dans l'exemple illustré (figure 3B).
Etape ii/ : Afin de réaliser un élément d'un deuxième circuit C2 de fluides, on usine dans l'autre des faces principales 102 d'une plaque métallique 10, des rainures 30 droites et parallèles à la largeur de la plaque dans l'exemple illustré (figure 3C).

Les rainures 20, 30 peuvent être réalisées par tout moyen adapté : usinage mécanique, gravage chimique, emboutissage...

On réalise alors comme usuellement des pièces annexes nécessaires à la réalisation de l'empilement des plaques rainurées 10 et à leur assemblage (outillages). Il peut s'agir notamment de piges d'alignement, d'outils de maintien (soudage diffusion uniaxial), éventuellement d'un conteneur si l'empilement des plaques est assemblé par soudage diffusion par CIC.
Etapes i1/ et ii1/: on réalise un nettoyage à l'aide de solvants et détergents, des plaques 10.
Etape iii/ : Après les avoir nettoyées, on empile l'ensemble des plaques 10 de façon à reconstituer à la fois les éléments à canaux 2 du premier circuit C1 et les éléments à canaux 3 du deuxième circuit C2.

Lors de l'empilement, toutes les plaques 1 sont alignées les unes par rapport aux autres grâce aux piges d'alignement ou à des pions de centrage non représentés, insérés dans des trous borgnes.

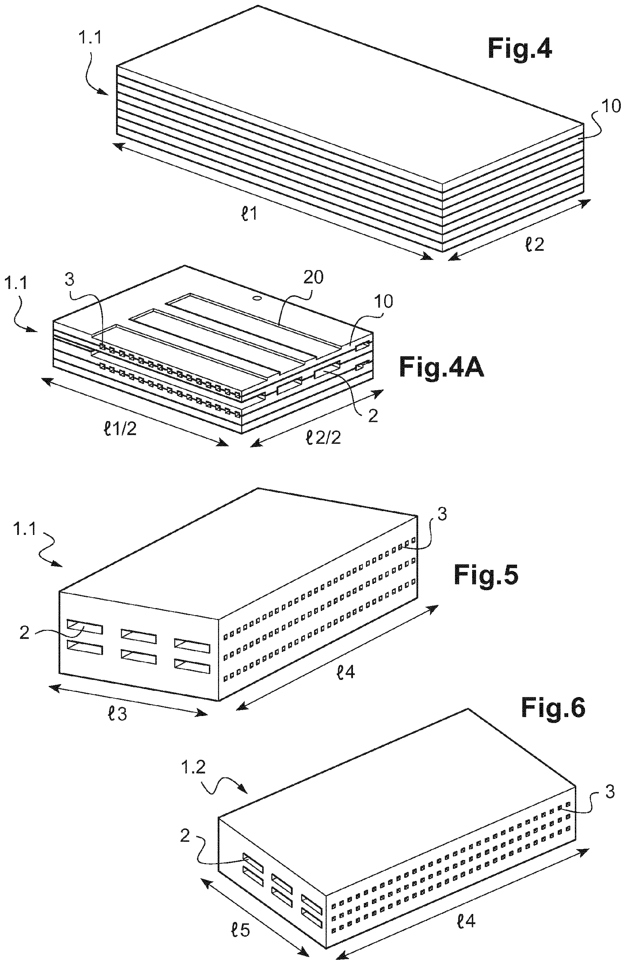

Les figures 4 et 4A montrent un exemple d'empilement pour la réalisation d'un module élémentaire d'échangeur 1.1 avec une superposition des canaux 2, 3 des deux circuits de fluide C1, C2.

Etape iv/ : On rend étanche la périphérie de l'empilement (bloc) complet et on dégaze chaque interface par un orifice débouchant que l'on obstrue. Pour réaliser l'étanchéité à la périphérie de l'empilement, on réalise l'empilement complet dans un conteneur.

Le conteneur, réalisé en tôle d'acier inoxydable pliée et soudée par procédé TIG, est lui-même nettoyé ainsi que son couvercle. Le couvercle est soudé TIG sur le conteneur puis le conteneur est mis sous vide par pompage à travers un tube soudé sur un de ses côtés. Le tube est ensuite pincé, coupé et lui-même soudé pour prévenir une introduction d'air dans le conteneur.

On soumet ensuite le conteneur, et donc l'empilement complet à un cycle de CIC basse pression comprenant un chauffage de 900 à 1100°C pendant un temps de 1 à 4h sous une pression de 30 à 300bar, puis un refroidissement en plusieurs heures et une dépressurisation.

On réalise l'ensemble de ces étapes i/ à iv/ pour chacun des modules élémentaires 1.1, 1.2, 1.3 destinés à constituer l'échangeur monobloc selon l'invention.

### Etape b/ : Pour chacun des modules élémentaires 1.1, 1.2, 1.3, on réalise alors leur réduction comprenant une diminution des rives par fraisage et l'ouverture des canaux 2 et/ou 3 par découpe des extrémités de l'empilement qui les obturent.

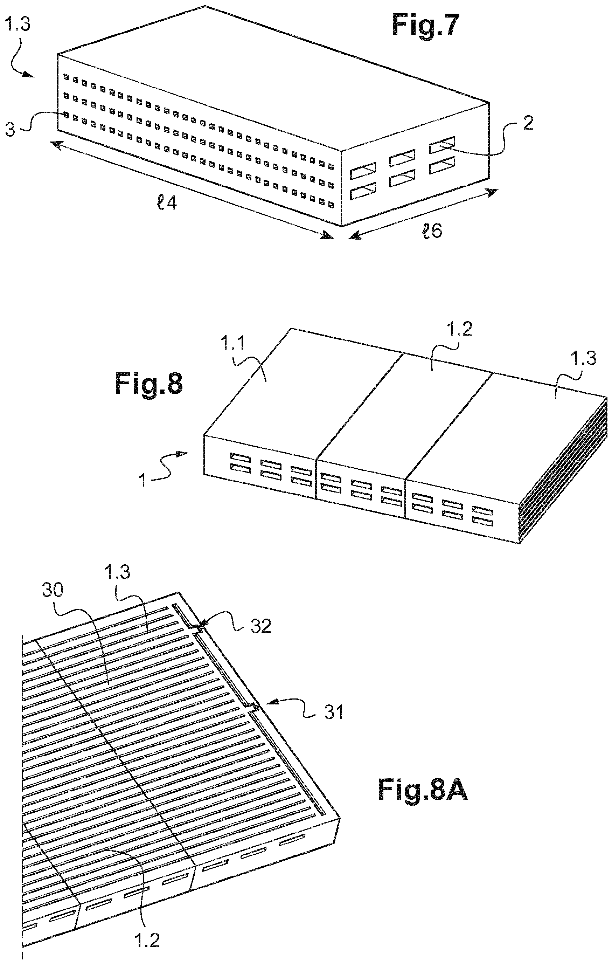

Dans l'exemple illustré :
- le module élémentaire 1.1 été usiné de telle sorte à avoir une longueur 14 et une largeur 13, avec tous les canaux 2, 3 à la fois du premier circuit et du deuxième circuit qui ont été ouverts, c'est-à-dire débouchant tous à l'extérieur (figure 5) ;
- le module élémentaire 1.2 été usiné de telle sorte à avoir une longueur 14 et une largeur 15, avec tous les canaux 2 du premier circuit, parallèles à la longueur de l'échangeur, qui ont été ouverts en leurs deux extrémités, tandis que les canaux 3 du deuxième circuit parallèles à la largeur de l'échangeur ont été ouverts sur une seule de leur extrémité (figure 6) ;
- le module élémentaire 1.3 été usiné de telle sorte à avoir une longueur 14 et une largeur 16, avec tous les canaux 2 du premier circuit parallèles à la longueur de l'échangeur qui ont été ouverts en leurs deux extrémités, tandis que les canaux 3 du deuxième circuit, parallèles à la largeur de l'échangeur, ont été ouverts sur une seule de leur extrémité (figure 7).

### Etape c/: A l'issue des usinages de tous les modules élémentaires, on les positionne bord-à-bord. Dans l'exemple illustré, on accole les trois modules élémentaires 1.1, 1.2, 1.3 de même longueur 14 mais de largeur différente 13, 15, 16, par leur bord longitudinal sur le côté de sorte à constituer un bloc 1 de dimensions extérieures 14x (13+15+16) (figure 8).

### Etape d/: une fois le positionnement bord-à-bord des modules élémentaires 1.1, 1.2, 1.3 réalisé, on réalise alors l'assemblage des interfaces de l'échangeur constitué. Cela est avantageusement mis en oeuvre au moyen du soudage diffusion par CIC. On nettoie d'abord les modules élémentaires réduits, à l'aide de solvants et détergents.

Ensuite, on réalise l'étanchéité des interfaces par soudage TIG puis, la mise sous vide des interfaces étanchéifiées entre les modules élémentaires et donc également celles des canaux qui communiquent avec ces dernières, afin d'assurer leur continuité d'un module élémentaire à un autre.

La figure 8A montre ainsi les usinages 31 (perçages) préalablement réalisés et qui permettent de connecter entre elles les différentes zones de canaux 3 à souder ainsi que les usinages 32 qui permettent de souder un queusot et ainsi de réaliser la mise sous vide.

On procède ensuite à la fermeture étanche des queusots.

On applique enfin au bloc 1 de modules élémentaires 1.1, 1.2, 1.3, obtenu un cycle de CIC à basse pression, typiquement à une pression entre 20 et 500 bar, de préférence compris entre 30 et 300 bar. Le choix de la pression résulte d'un compromis entre qualité de soudage à obtenir et déformation acceptable des canaux non ouverts.

On peut réaliser ultérieurement un ou plusieurs usinages pour finaliser l'échangeur de chaleur monobloc 1, en particulier ouvrir le circuit de fluide laissé fermé

On peut ensuite soumettre l'échangeur à un cycle de CIC haute pression, typiquement sous une pression comprise entre 200 et 2000 bar, de préférence entre 500 et 1200 bar. Lors de ce cycle, on parfait l'assemblage des plaques constitutives des modules élémentaires et celui des modules entre eux.

On peut aussi ultérieurement rapporter par soudage des collecteurs de distribution de fluide non représentés, de sorte à alimenter et/ou récupérer un fluide dans chacun des premier C1 et deuxième C2 circuits au niveau des extrémités des rainures formant les canaux 2, 3.

Grâce au procédé selon les étapes a/ à d/, on obtient un échangeur de chaleur monobloc assemblé par soudage-diffusion en CIC qui est compact, présente de grandes dimensions et/ou un grand nombre de canaux dont la forme géométrique a subi très peu de déformations par rapport à celle initiale conférée lors l'empilement.

Bien entendu, la présente invention n'est pas limitée aux variantes et aux modes de réalisation décrits fournis à titre d'exemples illustratifs et non limitatifs.

Dans l'exemple illustré, les modules élémentaires d'échangeur sont accolés latéralement. On peut aussi envisager de les positionner bord-à-bord dans le sens de la hauteur, c'est-à-dire les empiler les uns sur les autres. Dans ce cas, les deux circuits de fluide peuvent être ouverts lors de l'assemblage de l'échangeur : le cycle de CIC appliqué peut alors être un cycle de type haute pression comme ci-dessus. Le positionnement peut aussi être effectué dans le sens de la longueur, c'est-à-dire mis bout-à-bout, à la suite les uns des autres, ou encore dans plusieurs directions en même temps.

Dans l'exemple illustré, toutes les plaques constitutives de tous les modules élémentaires sont en un même matériau, de préférence un acier inoxydable de type 316L. On peut aussi envisager d'avoir des plaques de matériau constitutif différent au sein d'un même module élémentaire ou des plaques de matériau différent d'un module élémentaire à l'autre.

Dans l'exemple illustré, on prévoit de réaliser les étanchéités aux interfaces entre modules élémentaires par soudure. Tout autre moyen permettant de réaliser l'étanchéité et conservant son intégrité lors du passage en soudage-diffusion du bloc peut être mis en oeuvre.

La taille des canaux pour chacun des circuits de fluide peut être différente selon la nature et les propriétés des fluides à véhiculer, les pertes de charges admissibles et le débit souhaité. On peut empiler plusieurs éléments du même circuit dans le but d'optimiser une fonctionnalité de l'échangeur, par exemple l'échange thermique ou le débit d'un des fluides.

Si l'exemple illustré concerne des échangeurs à exactement deux circuits de fluides, il est tout à fait possible de fabriquer un échangeur à trois circuits de fluides ou plus, à partir de deux, trois ou plus modules élémentaires d'échangeur.

Les deux collecteurs de fluide peuvent être agencés de part et d'autre de l'échangeur, ou de manière alternative d'un même côté de l'échangeur.

Les échangeurs de chaleur obtenus selon le procédé de l'invention peuvent être assemblés les uns aux autres, par exemple en utilisant des brides ou en soudant les tuyauteries d'amenée de fluides. On peut ainsi envisager de réaliser un système échangeur de chaleur à plusieurs échangeurs reliés entre eux dans lequel les échanges se font en plusieurs étapes avec des températures moyennes différentes ou des écarts de température par module suffisamment réduits pour diminuer les contraintes thermiques dans les matériaux. Par exemple, dans le cas d'un échangeur de chaleur dans lequel on désire transférer la chaleur d'un premier fluide à un second, on peut concevoir un système d'échangeur dans lequel chaque échangeur permet de diminuer la température du premier fluide d'une valeur donnée, limitant ainsi les contraintes par rapport au cas d'une conception à un seul échangeur présentant un écart de température plus élevé. Pour cela, la température d'entrée du second fluide peut différer d'un module à l'autre. Dans un autre exemple, un système de réacteur-échangeur permet de mener une réaction chimique complexe par étages en contrôlant précisément la température de réaction à chaque étage, pour un contrôle optimal de la réaction chimique, une minimisation des risques et une maximisation des rendements.

Un système d'échangeurs de chaleur à plusieurs échangeurs permet aussi de diminuer les coûts de maintenance, en permettant le remplacement individuel d'un échangeur défaillant, voire les coûts de fabrication par standardisation des échangeurs.

## Revendications

1. Procédé de réalisation d'un échangeur de chaleur (1) à au moins deux circuits de fluide comportant chacun des canaux, **caractérisé en ce qu'**il comporte les étapes suivantes :
a/ réalisation d'au moins deux modules élémentaires d'échangeur (1.1, 1.2, 1.3...), la réalisation de chaque module élémentaire comprenant les étapes suivantes :
i/ réalisation d'un ou plusieurs éléments d'un des deux circuits de fluide, dit premier circuit, chaque élément du premier circuit comportant au moins une plaque métallique (10) comportant des premières rainures (20) formant au moins une partie des canaux (2) du premier circuit;
ii/ réalisation d'un ou plusieurs éléments (1) d'au moins un autre circuit de fluide, dit deuxième circuit, chaque élément du deuxième circuit comportant au moins une plaque métallique (10) comportant des deuxièmes rainures (30) formant au moins une partie des canaux (3) du deuxième circuit;
iii/ empilement des plaques métalliques (10) des éléments des premier et deuxième circuits de sorte à former leurs canaux (2,3);
iv/ assemblage par soudage-diffusion entre le ou les éléments du premier circuit et le ou les éléments du deuxième circuit, empilés les uns sur les autres ;
b/ modification d'au moins un des modules élémentaires comprenant une réduction de la largeur d'au moins une des rives et/ou de l'épaisseur d'au moins une des enclumes d'au moins un des modules et éventuellement une ouverture des canaux (2, 3) du premier circuit et/ou du deuxième circuit vers l'extérieur ;
c/ positionnement bord-à-bord des modules élémentaires (1.1, 1.2, 1.3...) dont au moins un réduit, selon un de leurs bords longitudinaux ou un de leurs bords latéraux ;
d/ assemblage des interfaces entre les modules élémentaires bord-à-bord, afin d'obtenir l'échangeur sous forme monobloc.

2. Procédé selon la revendication 1, selon lequel avant l'étape iii/ d'empilement, on réalise une étape i1/ et ii1/ de nettoyage des plaques de chaque élément respectivement du premier circuit et deuxième circuit.

3. Procédé selon la revendication 1 ou 2, selon lequel on réalise l'étape iv/ par application d'un cycle de compression isostatique à chaud (CIC) à relativement basse pression à l'empilement étanche et dégazé de chaque module élémentaire.

4. Procédé selon la revendication 3, le cycle de CIC selon l'étape iv/ étant réalisé à une pression comprise entre 20 et 500 bar, de préférence compris entre 30 et 300 bar.

5. Procédé selon l'une quelconque des revendications 3 ou 4, le cycle de CIC selon l'étape iv/ étant réalisé à une température comprise entre la température ambiante et 1100°C, de préférence entre 900 et 1100°C.

6. Procédé selon l'une des revendications précédentes, selon lequel, lors de l'étape b/, la réduction de la largeur d'au moins une des rives et/ou de l'épaisseur d'au moins une des enclumes d'au moins un des modules est réalisée en enlevant les outils par démoulage ou usinage, ou en usinant une partie des bordures non rainurées des plaques et/ou les enclumes.

7. Procédé selon l'une quelconque des revendications précédentes, selon lequel lors de l'étape b/, l'ouverture des canaux peut être réalisée par usinage des extrémités du module ou perçage en regard des canaux.

8. Procédé selon l'une quelconque des revendications précédentes, selon lequel l'étape c/ de positionnement bord-à-bord consiste en un empilement des modules élémentaires par les faces principales des plaques d'extrémité des modules.

9. Procédé selon l'une quelconque des revendications 1 à 7, selon lequel l'étape c/ de positionnement bord-à-bord consiste en un alignement bord-à-bord selon la longueur des modules élémentaires.

10. Procédé selon l'une quelconque des revendications 1 à 7, selon lequel l'étape c/ de positionnement bord-à-bord consiste en un positionnement bord latéral d'un des modules élémentaires contre un bord latéral de l'autre des modules élémentaires.

11. Procédé selon l'une quelconque des revendications précédentes, l'étape d/ étant réalisée par soudage par faisceau d'électrons, brasage ou soudage-diffusion des modules réduits entre eux.

12. Procédé selon la revendication 11, l'étape d/ consistant en un soudage-diffusion avec application d'au moins un cycle de compression isostatique à chaud (CIC).

13. Procédé selon la revendication 12, le soudage-diffusion des modules élémentaires réduits selon l'étape d/ est réalisé lors du cycle haute pression permettant de finir le soudage des interfaces internes des modules élémentaires, l'étape b/ comprenant une ouverture des canaux (2, 3) du premier circuit et/ou du deuxième circuit vers l'extérieur.

14. Procédé selon l'une quelconque des revendications précédentes, un module élémentaire comprenant des plaques en matériaux différents.

15. Procédé selon l'une quelconque des revendications précédentes, le ou les matériaux constitutifs d'un module élémentaire étant différent de celui ou ceux d'un autre module élémentaire.

16. Procédé selon l'une quelconque des revendications différentes, comprenant une étape e/ d'usinage final pour finaliser l'échangeur monobloc.

17. Echangeur de chaleur (1) à au moins deux circuits de fluide obtenu selon le procédé selon l'une quelconque des revendications précédentes, ledit échangeur de chaleur à au moins deux circuits de fluide étant **caractérisé en ce qu'**il comprend :
au moins deux modules élémentaires d'échangeur (1.1, 1.2, 1.3) de chaleur à au moins deux circuits de fluide assemblés bord-à-bord, afin d'obtenir l'échangeur sous forme monobloc, chacun desdits modules élémentaires d'échangeur à au moins deux circuits de fluide comprenant :
i/ un ou plusieurs éléments d'un des deux circuits de fluide, dit premier circuit, chaque élément du premier circuit comportant au moins une plaque métallique (10) comportant des premières rainures (20) formant au moins une partie des canaux (2) du premier circuit; et
ii/ un ou plusieurs éléments (1) d'au moins un autre circuit de fluide, dit deuxième circuit, chaque élément du deuxième circuit comportant au moins une plaque métallique (10) comportant des deuxièmes rainures (30) formant au moins une partie des canaux (3) du deuxième circuit;
le ou les plusieurs éléments du premier circuit et du deuxième circuit étant assemblé par soudage-diffusion après avoir été empilés les uns sur les autres.

## Patentansprüche

1. Verfahren zur Herstellung eines Wärmetauschers (1) mit mindestens zwei Fluidkreisläufen, die jeweils Kanäle aufweisen, **dadurch gekennzeichnet, dass** es die folgenden Schritte aufweist:
a/ Herstellen von mindestens zwei elementaren Tauschermodulen (1.1, 1.2, 1.3 ...), wobei die Herstellung von jedem elementaren Tauschermodul die folgenden Schritte aufweist:
i/ Herstellen von einem oder mehreren Elementen von einem der zwei Fluidkreisläufe, der erster Kreislauf genannt wird, wobei jedes Element des ersten Kreislaufs mindestens eine Metallplatte (10) aufweist, die erste Nuten (20) aufweist, die mindestens einen Teil der Kanäle (2) des ersten Kreislaufs bilden,
ii/ Herstellen von einem oder mehreren Elementen (1) von mindestens einem anderen Fluidkreislauf, der zweiter Kreislauf genannt wird, wobei jedes Element des zweiten Kreislaufs mindestens eine Metallplatte (10) aufweist, die zweite Nuten (30) aufweist, die mindestens einen Teil der Kanäle (3) des zweiten Kreislaufs bilden,
iii/ Stapeln der Metallplatten (10) der Elemente des ersten und zweiten Kreislaufs derart, um ihre Kanäle (2, 3) zu bilden,
iv/ Zusammenfügen durch Diffusionsschweißen zwischen dem oder den Elementen des ersten Kreislaufs und dem oder den Elementen des zweiten Kreislaufs, die aufeinander gestapelt sind,
b/ Ändern von mindestens einem der elementaren Module, umfassend mindestens ein Reduzieren der Breite von mindestens einer der Kanten und/oder der Dicke von mindestens einem der Anschläge von mindestens einem der Module und eventuell ein Öffnen der Kanäle (2, 3) des ersten Kreislaufs und/oder des zweiten Kreislaufs nach außen,
c/ Kante an Kante Positionieren der elementaren Module (1.1, 1.2, 1.3 ...), von denen mindestens eines entlang einer seiner Längskanten oder einer seiner Seitenkanten reduziert ist,
d/ Zusammenfügen der Schnittstellen zwischen den elementaren Modulen Kante an Kante, um den Tauscher in einstückiger Form zu erhalten.

2. Verfahren nach Anspruch 1, wobei vor dem Schritt iii/ des Stapelns ein Schritt i1/ und ii1/ des Reinigens der Platten von jedem Element jeweils des ersten und des zweiten Kreislaufs durchgeführt wird.

3. Verfahren nach Anspruch 1 oder 2, wobei der Schritt iv/ durch Anwenden eines heißisostatischen Preßzyklus (HIP) mit relativ niedrigem Druck auf den dichten und entgasten Stapel jedes elementaren Moduls durchgeführt wird.

4. Verfahren nach Anspruch 3, wobei der HIP-Zyklus nach Schritt iv/ bei einem Druck zwischen 20 und 500 bar, vorzugsweise zwischen 30 und 300 bar, durchgeführt wird.

5. Verfahren nach einem der Ansprüche 3 oder 4, wobei der HIP-Zyklus nach Schritt iv/ bei einer Temperatur zwischen der Umgebungstemperatur und 1.100 °C, vorzugsweise zwischen 900 und 1.100 °C, durchgeführt wird.

6. Verfahren nach einem der vorhergehenden Ansprüche, wobei bei dem Schritt b/ das Reduzieren der Breite von mindestens einer der Kanten und/oder der Dicke von mindestens einem der Anschläge von mindestens einem der Module durchgeführt wird, indem die Werkzeuge durch Entformen oder spanendes Bearbeiten entfernt werden, oder indem ein Teil der nicht genuteten Ränder der Platten und/oder der Anschläge spanend bearbeitet wird.

7. Verfahren nach einem der vorhergehenden Ansprüche, wobei bei dem Schritt b/ das Öffnen der Kanäle durch spanendes Bearbeiten der Enden des Moduls oder durch Bohren gegenüber von den Kanälen durchgeführt wird.

8. Verfahren nach einem der vorhergehenden Ansprüche, wobei der Schritt c/ des Kante an Kante Positionierens aus einem Stapeln der elementaren Module durch die Hauptflächen der Endplatten der Module besteht.

9. Verfahren nach einem der Ansprüche 1 bis 7, wobei der Schritt c/ des Kante an Kante Positionierens aus einem Kante an Kante Ausrichten entlang der Länge der elementaren Module besteht.

10. Verfahren nach einem der Ansprüche 1 bis 7, wobei der Schritt c/ des Kante an Kante Positionierens aus einem Positionieren der Seitenkante eines der elementaren Module gegen eine Seitenkante des anderen der elementaren Module besteht.

11. Verfahren nach einem der vorhergehenden Ansprüche, wobei der Schritt d/ durch Elektronenstrahlschweißen, Löten oder Diffusionsschweißen der reduzierten Module miteinander durchgeführt wird.

12. Verfahren nach Anspruch 11, wobei der Schritt d/ aus einem Diffusionsschweißen mit Anwenden von mindestens einem heißisostatischen Preßzyklus (HIP) besteht.

13. Verfahren nach Anspruch 12, wobei das Diffusionsschweißen der reduzierten elementaren Module nach Schritt d/ während des Hochdruckzyklus durchgeführt wird, der ermöglicht, die Verschweißungen der inneren Schnittstellen der elementaren Module zu beenden, wobei der Schritt b/ ein Öffnen der Kanäle (2, 3) des ersten Kreislaufs und/oder des zweiten Kreislaufs nach außen aufweist.

14. Verfahren nach einem der vorhergehenden Ansprüche, wobei ein elementares Modul Platten aus verschiedenen Materialien aufweist.

15. Verfahren nach einem der vorhergehenden Ansprüche, wobei das oder die Materialien, die ein elementares Modul bilden, von jenem oder jenen eines anderen elementaren Moduls verschieden ist oder sind.

16. Verfahren nach einem der verschiedenen vorhergehenden Ansprüche, umfassend einen Schritt e/ des abschließenden spanenden Bearbeitens, um den einstückigen Tauscher abzuschließen.

17. Wärmetauscher (1) mit mindestens zwei Fluidkreisläufen, der nach dem Verfahren von einem der vorhergehenden Ansprüche erhalten ist, wobei der Wärmetauscher mit mindestens zwei Fluidkreisläufen **dadurch gekennzeichnet ist, dass** er aufweist:
mindestens zwei elementare Wärmetauschermodule (1.1, 1.2, 1.3) mit mindestens zwei Fluidkreisläufen, die Kante an Kante zusammengefügt sind, um den Tauscher in einstückiger Form zu erhalten, wobei jedes der elementaren Wärmetauschermodule mit mindestens zwei Fluidkreisläufen aufweist:
i/ eines oder mehrere Elementen von einem der zwei Fluidkreisläufe, der erster Kreislauf genannt wird, wobei jedes Element des ersten Kreislaufs mindestens eine Metallplatte (10) aufweist, die erste Nuten (20) aufweist, die mindestens einen Teil der Kanäle (2) des ersten Kreislaufs bilden, und
ii/ eines oder mehrere Elemente (1) von mindestens einem anderen Fluidkreislauf, der zweiter Kreislauf genannt wird, wobei jedes Element des zweiten Kreislaufs mindestens eine Metallplatte (10) aufweist, die zweite Nuten (30) aufweist, die mindestens einen Teil der Kanäle (3) des zweiten Kreislaufs bilden,
wobei das oder die mehreren Elementen des ersten Kreislaufs und des zweiten Kreislaufs, durch Diffusionsschweißen zusammengefügt sind, nachdem sie aufeinander gestapelt worden sind.

## Claims

1. Method of production of a heat exchanger (1) with at least two fluid circuits each one comprising channels, **characterized in that** involves the following steps:
a/ production of at least two elementary modules of the exchanger (1.1, 1.2, 1.3, etc.), the production of each elementary module involving the following steps:
i/ production of one or more elements of one of the two fluid circuits, the so-called first circuit, each element of the first circuit comprising at least one metal plate (10) comprising first grooves (20) forming at least one portion of the channels (2) of the first circuit;
ii/ production of one or more elements (1) of at least one other fluid circuit, the so-called second circuit, each element of the second circuit comprising at least one metal plate (10) comprising second grooves (30) forming at least one portion of the channels (3) of the second circuit;
iii/ stacking of the metal plates (10) of the elements of the first and second circuits in order to form their channels (2, 3);
iv/ assembling by diffusion bonding of the element or elements of the first circuit and the element or elements of the second circuit, stacked one on the other;
b/ modification of at least one of the elementary modules involving a reduction of the width of at least one of the borders and/or of the thickness of at least one of the anvils of at least one of the modules and optionally an opening of the channels (2, 3) of the first circuit and/or of the second circuit to the outside;
c/ edge to edge positioning of the elementary modules (1.1, 1.2, 1.3, etc.), at least one of which is reduced, along one of their longitudinal edges or one of their lateral edges;
d/ assembling of the interfaces between the edge to edge elementary modules in order to obtain the exchanger in one-piece form.

2. Method according to Claim 1, wherein before the stacking step iii/, one performs a step i1/ and ii1/ of cleaning of the plates of each element respectively of the first circuit and second circuit.

3. Method according to Claim 1 or 2, wherein one performs step iv/ by application of a hot isostatic compression (HIC) cycle at relatively low pressure to the tight and degassed stack of each elementary module.

4. Method according to Claim 3, the cycle of HIC per step iv/ being performed at a pressure between 20 and 500 bar, preferably between 30 and 300 bar.

5. Method according to either one of Claims 3 and 4, the cycle of HIC per step iv/ being performed at a temperature between ambient temperature and 1100° C, preferably between 900 and 1100°C.

6. Method according to one of the preceding claims, wherein during step b/ the reduction of the width of at least one of the borders and/or the thickness of at least one of the anvils of at least one of the modules is accomplished by removing the tools by demolding or machining, or by machining part of the nongrooved borders of the plates and/or the anvils.

7. Method according to any one of the preceding claims, wherein during step b/ the opening of the channels can be accomplished by machining of the ends of the module or a bore opposite to the channels.

8. Method according to any one of the preceding claims, wherein step c/ of edge to edge positioning consists of a stacking of the elementary modules by the principal faces of the end plates of the modules.

9. Method according to any one of Claims 1 to 7, wherein step c/ of edge to edge positioning consists of an edge to edge alignment along the length of the elementary modules.

10. Method according to any one of Claims 1 to 7, wherein step c/ of edge to edge positioning consists of a positioning of a lateral edge of one of the elementary modules against a lateral edge of the other of the elementary modules.

11. Method according to any one of the preceding claims, step d/ being accomplished by electron beam welding, brazing, or diffusion bonding of the reduced modules between themselves.

12. Method according to Claim 11, step d/ consisting of a diffusion bonding with application of at least one hot isostatic compression (HIC) cycle.

13. Method according to Claim 12, the diffusion bonding of the reduced elementary modules per step d/ is done during the high-pressure cycle making it possible to finish the welding of the internal interfaces of the elementary modules, step b/ involving an opening of the channels (2, 3) of the first circuit and/or of the second circuit to the outside.

14. Method according to any one of the preceding claims, an elementary module comprising plates of different materials.

15. Method according to any one of the preceding claims, the material or materials making up one elementary module being different from that or those of another elementary module.

16. Method according to any one of the various claims, involving a step e/ of final machining to finish the one-piece exchanger.

17. Heat exchanger (1) with at least two fluid circuits obtained according to the method according to any one of the preceding claims, said heat exchanger with at least two fluid circuits being **characterized in that** it comprises:
at least two elementary modules of the heat exchanger (1.1, 1.2, 1.3) with at least two fluid circuits edge-to-edge in order to obtain the exchanger in one piece, each of said elementary exchanger modules with at least two fluid circuits comprising:
i/ one or more elements of one of the two fluid circuits, the so-called first circuit, each element of the first circuit comprising at least one metal plate (10) comprising first grooves (20) forming at least one portion of the channels (2) of the first circuit; and
ii/ one or more elements (1) of at least one other fluid circuit, the so-called second circuit, each element of the second circuit comprising at least one metal plate (10) comprising second grooves (30) forming at least one portion of the channels (3) of the second circuit;
the one or more elements of the first circuit and the second circuit being assembled by diffusion bonding after having been stacked one on the other.
